# EUROPEAN PATENT APPLICATION

(11) **EP 2 610 794 A1**
(43) Date of publication of application: **03.07.2013**
(21) Application number: 11196149.6
(22) Date of filing: 30.12.2011
(51) Int. Cl.: G06Q 10/10, G06F 3/048

(54) **Methods and apparatus for presenting a position indication for a selected item in a list**

(71) Applicant: Research In Motion Limited, Waterloo, ON N2L 3W8 (CA)
(72) Inventor: Chen, Henry Yao-Tsu, Waterloo, Ontario N2L 3W8 (CA); Leung, Chun Yin Bryan, Vancouver, British Columbia V5R 3H7 (CA)
(74) Representative: Bryn-Jacobsen, Caelia

(57) **Abstract**

Methods and apparatus for use in presenting a position indication for a selected item of a list having a plurality of items. At least some of the items in the list are displayed, and a selected item of the list is highlighted. A position indication is also displayed, along or within the selected item, at a lengthwise position that is proportional to a relative position of the selected item within the list. Various examples and alternatives are provided for an even further advantageous user interface.

## Description

### BACKGROUND

### Field of the Technology

The present disclosure relates generally to computing devices, and more particularly to techniques in a computing device for use in presenting a position indication for a selected item in a list, or for any other selected viewing region (e.g., a selected viewing region of a single or multi-page file).

### Description of the Related Art

Computing devices, such as computers, personal digital assistants (PDAs), cellular telephones, smart phones, audio and/or visual media players and the like, may be configured to execute one or more software applications which store data items. These items may be organized or sorted in a list which is presented to an end user for display. The end user may select one of the items, via a user interface of the device, to view further information associated with the item, or to invoke a function associated with the selected item.

Due to increased memory capacity and processing speed of such devices, which allows for the storing and/or accessing of an ever-increasing amount of data, as well as the increased number of features and options offered and made available by such devices, the presentation of lists for navigating and selecting items may become cluttered and confuse end users.

What are needed are advantageous methods and apparatus for a computing device which alleviates these and similar problems associated with the display and/or selection of items of a list or viewing regions of files.

### BRIEF DESCRIPTION OF THE DRAWINGS

Embodiments of present disclosure will now be described by way of example with reference to attached figures, wherein:
FIG. 1 is a schematic block diagram of one example of a computing device in which the techniques of the present disclosure may be employed;
FIG. 2 is a front view of the example of the computing device of FIG. 1, which is a handheld portable electronic device which is operative for wireless communications in a wireless network;
FIG. 3 is a flowchart for describing one general method for use in presenting a position indication for a selected item of a list;
FIGs. 4A-4B form a flowchart for describing a more detailed method for use in presenting a position indication for a selected item of a list;
FIGs. 5-8 provide illustrative representations of the presentation of selected items in a list, and example position indications corresponding to such selected items, to assist in illustrating the techniques described in relation to FIG. 3 and FIGs. 4A-4B;
FIG. 9 is an illustrative summary of selected items of the list having the position indications of FIGs. 5-8, but providing more detail;
FIG. 10 is another illustrative summary of selected items of the list representation of FIG. 9, but having alternative position indications in accordance with the present disclosure;
FIGs. 11-14 are illustrative representations of the presentation of selected items of the list with other alternative position indications corresponding to the selected items in accordance with the present disclosure;
FIGs. 15-18 are illustrative representations of the presentation of selected items of the list with yet other alternative position indications corresponding to the selected items in accordance with the present disclosure; and
FIGs. 19-28 are illustrative representations of the presentation of selected items of a list, where the list includes a larger count of items than that described in relation to FIGs. 5-8, showing position indications corresponding to the selected items in accordance with the present disclosure.

### DETAILED DESCRIPTION

What are described herein are methods and apparatus of a computing device for presenting a position indication for a selected item of a list having a plurality of items. At least some of the items in the list are presented for display in the computing device, and a selected item of the list is highlighted. A position indication is also presented, along or within the selected item, at a lengthwise position that is proportional to a relative position of the selected item within the list. Various embodiments and alternatives are provided for an advantageous user interface.

In the present disclosure, for simplicity and clarity of illustration, reference numerals may be repeated among the figures to indicate corresponding or analogous elements. In addition, numerous specific details are set forth in order to provide a thorough understanding of the embodiments described herein. The embodiments described herein may be practiced without these specific details. In other instances, well-known methods, procedures and components have not been described in detail so as not to obscure the embodiments described herein. Also, the description is not to be considered as limited to the scope of the embodiments described herein.

As described above, the present disclosure generally relates to a computing device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities, such as a handheld electronic game device, digital photograph album, digital camera, or other device.

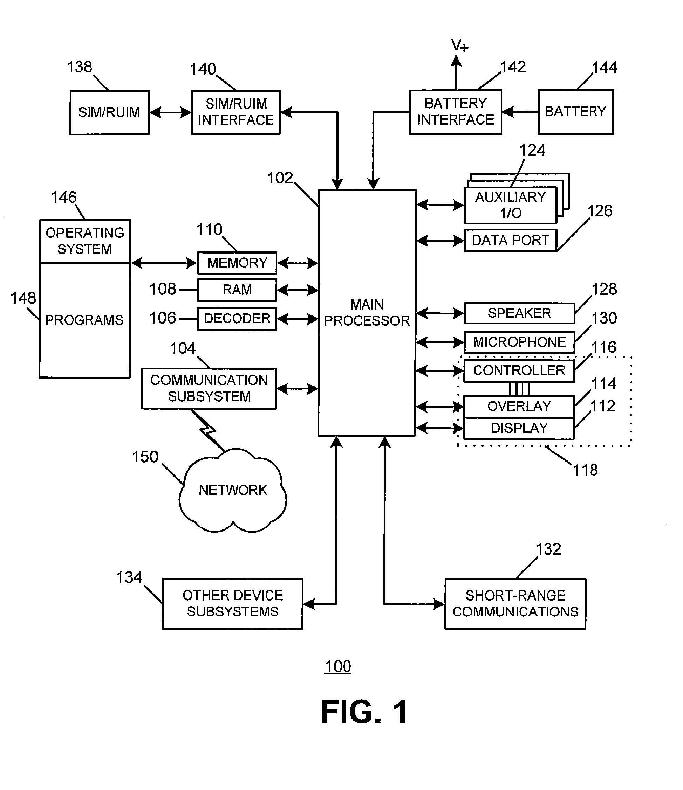

A block diagram of an example of such a computing device 100 is shown in FIG. 1. Computing device 100 includes a number of components such as a processor 102 that controls the overall operation of the device 100. Communication functions, including data and voice communications, are performed through a communication subsystem 104. Data received by computing device 100 is decompressed and decrypted by a decoder 106. Communication subsystem 104 receives messages from and sends messages to a wireless network 150. Wireless network 150 may be any type of wireless network, including, but not limited to, data-centric wireless networks, voice-centric wireless networks, and dual-mode networks that support both voice and data communications over the same physical base stations. Computing device 100 may be a battery-powered device and includes a battery interface 142 for receiving one or more rechargeable batteries 144.

Processor 102 also interacts with additional subsystems such as a Random Access Memory (RAM) 108, a memory 110, a display 112 (which may or may not have a touch-sensitive overlay 114 connected to an electronic controller 116 that together make up a touch-sensitive display 118), an auxiliary input/output (I/O) subsystem 124, a data port 126, a speaker 128, a microphone 130, short-range communications 132 and other device subsystems 134. Processor 102 may interact with (touch-sensitive) display 118 via the electronic controller 116.

To identify a subscriber for network access according to the present embodiment, the portable electronic device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into memory 110.

Computing device 100 also includes an operating system 146 and software components 148 that are executed by processor 102 and are typically stored in a persistent, updatable store such as memory 110. Additional applications may be loaded onto the computing device 100 through wireless network 150, auxiliary I/O subsystem 124, data port 126, short-range communications subsystem 132, or any other suitable device subsystem 134.

In use, a received signal such as a text message, an e-mail message, or web page download is processed by communication subsystem 104 and input to the processor 102. Processor 102 then processes the received signal for output to display 118 or alternatively to the auxiliary I/O subsystem 124. A subscriber may also compose data items, such as e-mail messages, for example, which may be transmitted over the wireless network 150 through the communication subsystem 104. For voice communications, the overall operation of computing device 100 is substantially similar except that the received signals are output to speaker 128 and signals for transmission are generated by microphone 130.

Display 118 is configured to display information from an application, such as a web browser, contact list, email, voicemail, calendar, music player, spreadsheet, word processing, operating system interface, and so forth. The information may be data, pictures, webpages, application output, text, characters, symbols, images, and other items that may be displayed on a computing device. The information may therefore be comprised of multiple parts, in some examples, as parts of a list. These parts may be, for example, contact lists, search results (such as lists of people, things, auction items, products for sale, specifications, and so forth), emails, calendar events, spreadsheets, text, data from a database, songs, and pictures, to name a few.

A user input device of the user interface, such as a key or button, may be actuated to advance to a next item in a list, and another key or button may be actuated to go back to the previous item in the list. Alternatively, a scrollwheel, a touch pad, or the like may be utilized for this purpose. Other applications may use alternative advancing or decrementing mechanisms, such as entering a menu and making a selection. On the other hand, the use of a gesture, such as a swipe on a touch-sensitive display, instead of selection of a key, button, or menu, facilitates list advance and decrement without additional input devices.

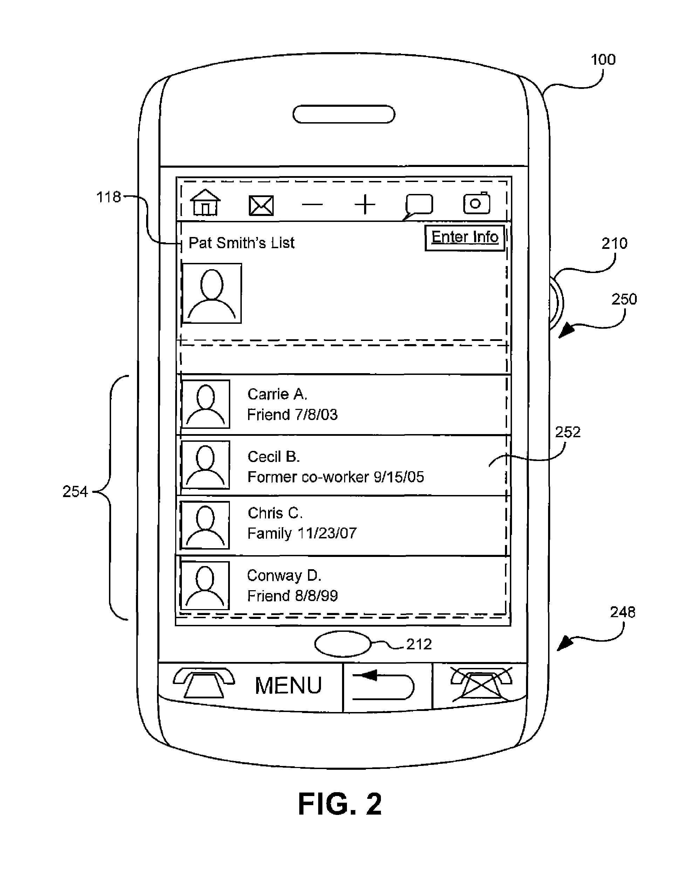

FIG. 2 is a front view of one example of computing device 100 of FIG. 1. Computing device 100 is shown as presenting a list 250 of items (e.g., an item 252) in a display region 254 of its display 118. In the example shown in FIG. 2, the items may be contact names of a list of contacts stored in association with a contact list (or address book) application executed by computing device 100. For scrolling through and/or selecting a particular item in list 250, an end user of computing device 100 may utilize one or more various user input devices which may be provided by computing device 100. The one or more user input devices may be one or more input keys or buttons 248, a scroll wheel 210, a touch pad 212, or a touch screen display 118. The end user may select one of these items, via a user interface of the device, to obtain further information associated with the item, or to invoke a function associated with the selected item.

Due to increased memory capacity and processing speed of such computing devices 100, which allows for the storing and accessing of an ever-increasing amount of data, as well as the increased number of features and options offered and made available by such computing devices 100, the display involving such a list 250 may become cluttered and confuse end users during the navigation and selection of desired items.

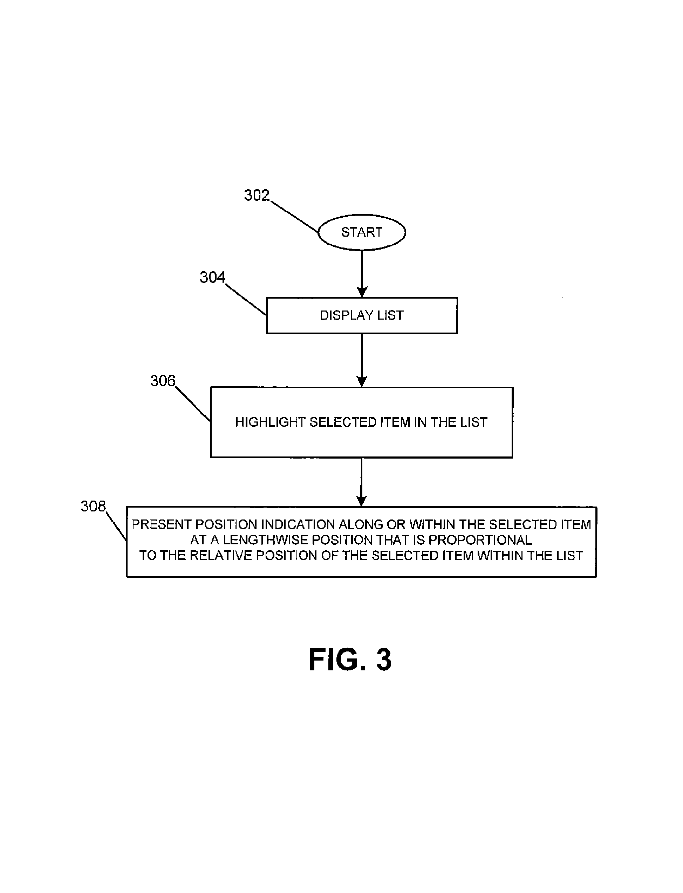

FIG. 3 is a flowchart for describing a general method for use in presenting a position indication for a selected item of a list, which helps alleviate issues associated with conventional techniques. Such method is suitable for use in a computing device, such as computing device 100 described above in relation to FIGs. 1-2. In particular, the techniques described in relation to the flowchart may be performed by one or more controllers or processors of the computing device, for example, in accordance with instructions of an application of the device. A computer program product which may embody the technique may include a computer readable medium (e.g., memory of the computing device, computer disk, CD-ROM, etc.) having computer instructions stored therein which are executable by a processor of the computing device for performing the technique. These computer instructions may be embodied as part of the application of the computing device.

Beginning at a start block 302 of FIG. 3, the processor 102 of the computing device executes an application and presents a list of items in a display 118 for viewing (step 304 of FIG. 3). As shown in this example, each item is represented as an object (e.g. a rectangular object) having information contained therein. For example, the items may be contact names of a list of contacts in a contact list application or address book application. However, any other suitable items in a list may be presented, such as message headers of a list of messages, file identifiers of a list of files, and folder identifiers of a list of file folders, etc. The items of the list may be presented, for example, from top to bottom (i.e. vertically) in the display 118. Each item in the list may be associated with an item number corresponding to its numeric order in the list.

Depending on the size of the display 118 and the number of items in the list, all or only some of the items in the list may be viewable at the same time. For selecting and viewing a particular item in the list, the end user is provided with control via a user interface of the device. In response to a user input, the processor 102 causes a selected item of the list to be highlighted or otherwise visually emphasized in the display 118 (step 306 of FIG. 3).

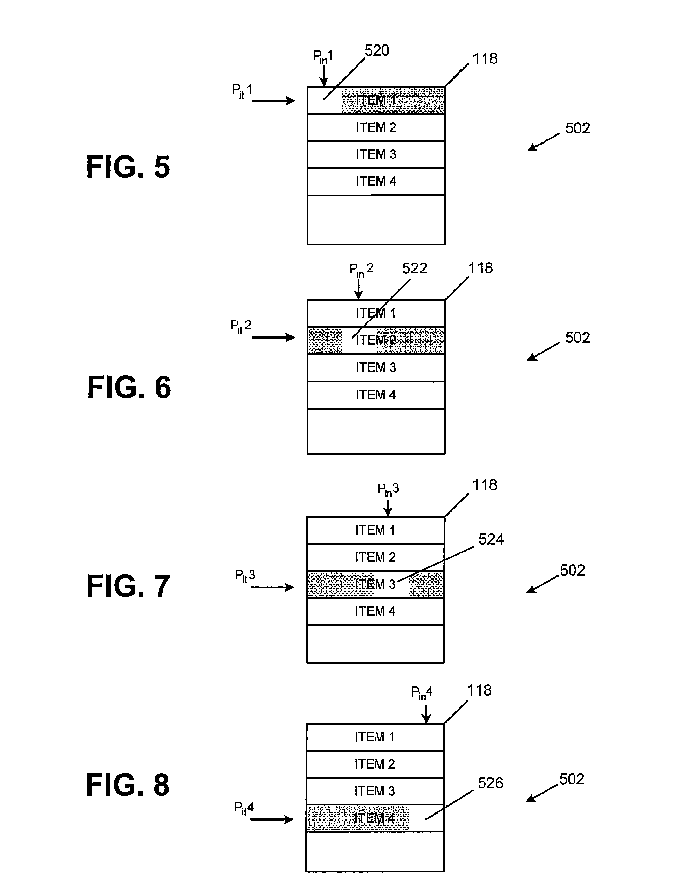

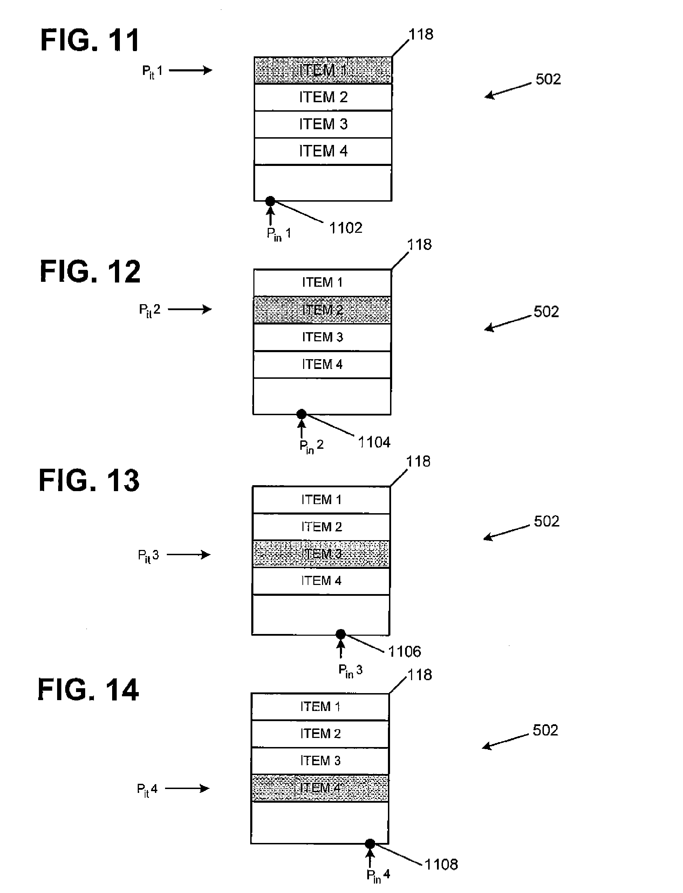

In addition, the processor 102 causes a position indication to be presented along or within the selected item (step 308 of FIG. 3). From the end user's perspective, the position indication visually indicates the relative position of the selected item in the list. Notably, the position indication is presented along or within the selected item at a lengthwise position (e.g., from left to right, or horizontally) that is proportional to the relative position of the selected item in the list. The lengthwise position may be said to be proportional to a ratio of the item number of the selected item over the total number of items in the list. For illustrative examples, see FIGs. 5-8, FIG. 9, FIG. 10, and FIGs. 19-28, which are described below in more detail. See also alternative embodiments of e.g. FIGs. 11-14 and FIGs. 15-18.

Note that the position indication may be any suitable visual marker of such position. In one example, the position indication is provided as a glow effect along the highlighted selected item. In another example, the position indication is provided as an unhighlighted region of the highlighted selected item. In another example, the position indication is provided as a color variation in the highlighted selected item (e.g., the position indication has a color which is different from or a variation of the color of the highlight).

To help illustrate the technique, FIGs. 5-8 are illustrative representations of selected items of a list 502 presented in display 118. List 502 includes a plurality of data items. In this example, the items of list 502 include an Item 1, an Item 2, an Item 3, and an Item 4; the count (C_{IT}) of the total number of items in the list is four (4). As apparent from these figures, a position indication is presented along or within each selected item at a lengthwise position that is proportional to the relative position of the selected item in the list. As revealed, the position indication may be provided along the highlighted selected item as an unhighlighted region, a glow effect, or even a color variation.

In particular, FIG. 5 shows that Item 1 which is at item position (P_{IT}) = 1 is selected and highlighted, and accordingly a position indication 520 is presented along Item 1 at a lengthwise position at an indication position (P_{IN}) = 1. In addition, FIG. 6 shows that Item 2 which is at item position P_{IT} = 2 is selected and highlighted, and accordingly a position indication 522 is presented along Item 2 at a lengthwise position at an indication position P_{IN} = 2. Even further, FIG. 7 shows that Item 3 which is at item position P_{IT} = 3 is selected and highlighted, and accordingly a position indication 524 is presented along Item 3 at a lengthwise position at an indication position P_{IN} = 3. Finally, FIG. 8 shows that Item 4 which is at item position P_{IT} = 4 is selected and highlighted, and accordingly a position indication 526 is presented along Item 4 at a lengthwise position at an indication position PIN = 4. As apparent from FIGs. 5-8, the item position P_{IT} is a vertical position (from top to bottom) and indication position P_{IN} is a horizontal position (from left to right).

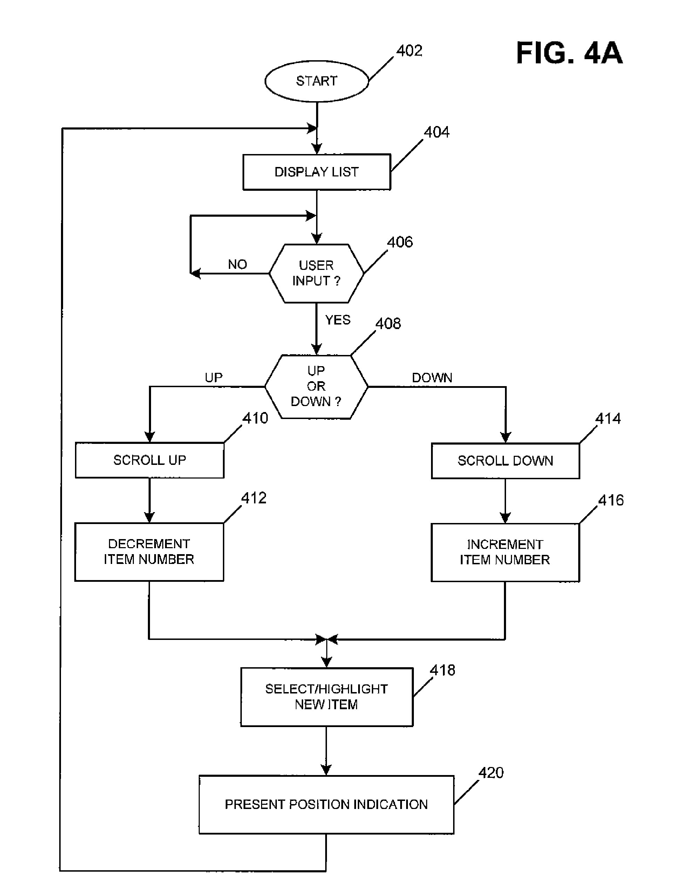

FIGs. 4A-4B form a flowchart for describing a more detailed method for use in presenting a position indication for a selected item of a list. Again, such method is suitable for use in a computing device, such as a wireless communication device described above in relation to FIGs. 1-2. In particular, the techniques described in relation to the flowchart of FIGs. 4A-4B may be performed by one or more controllers or processors of the computing device, for example, in accordance with instructions of an application of the device. A computer program product which may embody the technique may include a computer readable medium (e.g., memory of the computing device, computer disk, CD-ROM, etc.) having computer instructions stored therein which are executable by the processor 102 of the computing device for performing the technique. These computer instructions may be embodied as part of the application of the computing device.

Beginning at a start block 402 of FIG. 4A, the processor 102 of the computing device executes an application of the device and presents a list of items in a display 118 for viewing (step 404 of FIG. 4A). For example, the items may be contact names or identifiers of a list of contacts in a contact list application or address book application. However, any other suitable items in a list may be presented, such as message headers of a list of messages, file identifiers of a list of files, and folder identifiers of a list of folders, etc. The items of the list may be displayed, for example, from top to bottom, or vertically. Each item in the list may be associated with an item number corresponding to its numeric order in the list. Depending on the size of the display 118 and the number of items in the list, all or only some of the items in the list may be viewable at the same time.

For selecting and viewing a particular item in the list, the end user is provided with control via a user interface of the device. The processor 102 monitors for a user input via the user interface (step 406 of FIG. 4A). If there is no user input detected via the user interface at step 406, the processor 102 continues to monitor for detection of such user input.

If the processor 102 detects a user input via the user interface at step 406, the processor 102 identifies whether the user input corresponds to a scroll "up" request or scroll "down" request (step 408 of FIG. 4A). If the processor 102 identifies a scroll up request at step 408, then the processor 102 causes an upwards scrolling of the list (step 410 of FIG. 4A), and the current item number is decremented (step 412 of FIG. 4A). On the other hand, if the processor 102 identifies a scroll down request at step 408, then the processor 102 causes a downwards scrolling of the list (step 414 of FIG. 4A), and the current item number is incremented (step 416 of FIG. 4A). In either case (i.e. up or down), the processor 102 causes the new item to be selected and highlighted, or otherwise visually emphasized, in the display 118 (step 418 of FIG. 4A).

In addition, the processor 102 causes a position indication to be presented along or within the newly selected item (step 420 of FIG. 4A). From the end user's perspective, the position indication visually indicates the relative position of the selected item in the list. The position indication is presented along or within the selected item at a lengthwise position (e.g., from left to right, or horizontal) that is proportional to the relative position of the selected item in the list. This lengthwise position may also be said to be proportional to a ratio of the item number of the selected item over the count of the total number of items in the list.

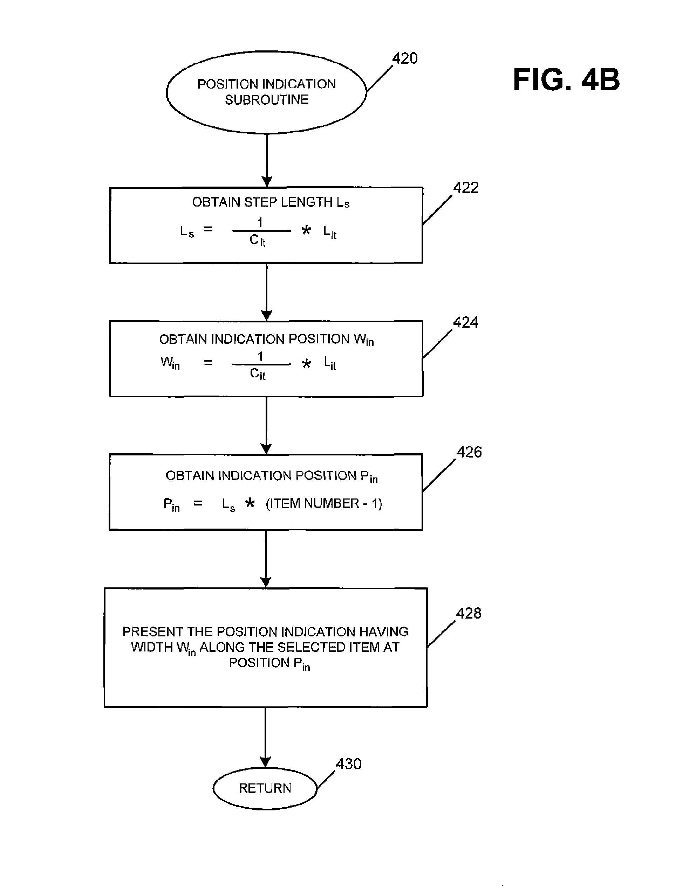

The producing and the presenting of the position indication in step 420 of FIG. 4A may be performed as now described in relation to FIG. 4B (a "Position Indication Subroutine" 420 of FIG. 4B). To begin, the processor 102 may obtain a step length Lₛ, which is the length of each discrete incremental step for the positioning of a given position indication (step 422 of FIG. 4B). Here, the step length Lₛ may be set to be inversely proportional to C_{IT}, the count of the total number of items in the list. In particular, the step length Lₛ = (1/C_{IT}) *L_{IT}, where L_{IT} is the displayed length of the selected item. Alternatively, and more generally, L_{IT} may be the length of the (e.g., horizontal) display region.

The processor 102 may also obtain an indication width W_{IN}, which is the width of each position indication (step 424 of FIG. 4B). In this example, the indication width W_{IN} may be set to be inversely proportional to C_{IT}, the count of the total number of items in the list. In particular, the indication width W_{IN} = (1/C_{IT})* L_{IT}, where L_{IT} is displayed length of the selected item. Alternatively, and more generally, L_{IT} may be the length of the (e.g., horizontal) display region.

The processor 102 then obtains an indication position P_{IN}, which is the lengthwise position at which the position indication will be presented (step 426 of FIG. 4B). The indication position PIN may be set to be proportional to the relative position of the selected item in the list. In one example, the indication position P_{IN} may be obtained by P_{IN} = (Item Number - 1)* Lₛ, where the Item Number is the item number of the currently selected item (as each item in the list may be associated with an item number corresponding to its numeric order in the list), and Lₛ is the step length for each discrete incremental step for positioning a given position indication (e.g., obtained in step 422). The indication position P_{IN} may also be said to be proportional to a ratio of the Item Number over the count of the total number of items in the list. Thus, in another example, the indication position P_{IN} may be obtained by P_{IN} = ((Item Number - 1)/C_{IT})*L_{IT}, where the intermediary step 422 need not be executed for obtaining the step length.

Finally, the processor 102 causes the position indication having the indication width W_{IN} to be presented along or within the selected item at a lengthwise position at position P_{IN} (step 428 of FIG. 4B). See FIGs. 5-8, FIG. 9, FIG. 10, and FIGs. 19-28 for illustrative examples, described in more detail elsewhere in this disclosure. See also the alternative embodiments of e.g. FIGs. 11-14 and FIGs. 15-18. Processing then returns at step 430, to further processing at step 404 of FIG. 4A.

Note that the variables obtained in steps 422, 424, and 426 of FIG. 4B may be pre-calculated, stored, and read from memory in steps 422, 424, and 426. In this case, an update to the list of items (e.g., an end user addition or deletion of an item in the list) may trigger a calculation or recalculation of any one or all of the variables of the count C_{IT}, width W_{IN}, and the step length Lₛ. Alternatively, each execution of steps 422, 424, and 426 may cause the actual calculation or recalculation of the corresponding variables.

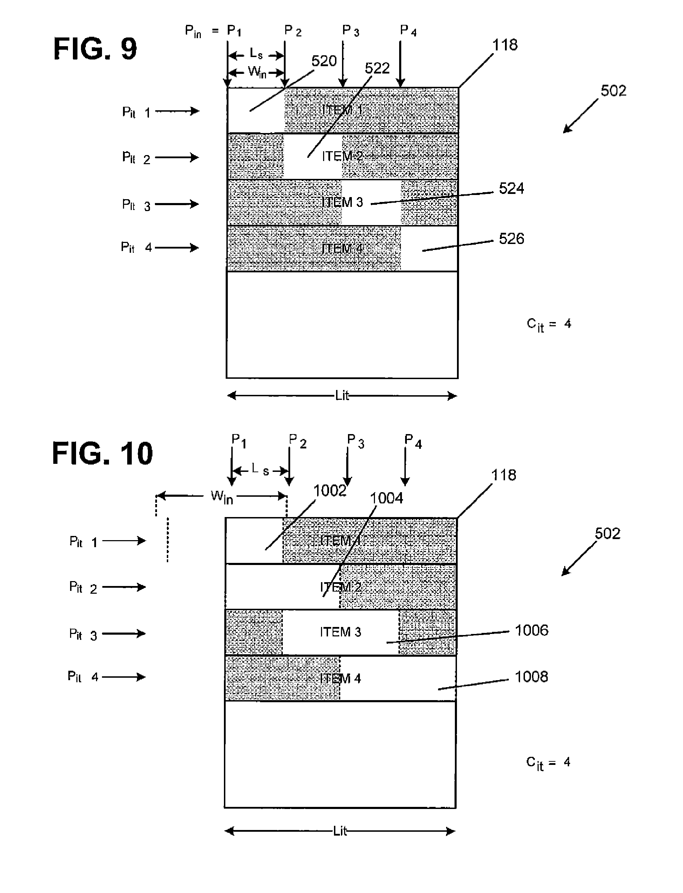

FIG. 9 is an illustrative summary of selected items of the list having the position indications of FIGs. 5-8, but providing more detail. In particular, FIG. 9 shows the step length L_{S}, the indication positions P_{IN} (P1, P2, P3, and P4) of the position indications, and the indication width W_{IN} of FIGs. 5-8 in more detail.

FIG. 10 is another illustrative summary of selected items of the list of FIG. 9, but with alternative position indications. In FIG. 10, the position indications are presented in substantially the same manner, however, the indication width W_{IN} of each position indication is set to be W_{IN} = (2/C_{IT})* L_{IT}, where L_{IT} is displayed length of the selected item. Note that the first position indication at position P_{IT} = 1 is half of this width, as the other half does not fit in the display 118.

FIGs. 11-14 provide alternative illustrative representations of selected items of the list presented in the display 118, which include other alternative position indications corresponding to the selected items, to assist in illustrating alternative techniques of the present disclosure. Again, the list 502 in FIGs. 11-14 includes Item 1, Item 2, Item 3, and Item 4; the count C_{IT} of the total number of items in the list is four (4). As apparent from these figures, a position indication is presented with (but not necessarily along or within) each selected item at a lengthwise position that is proportional to the relative position of the selected item in the list. Also as apparent, the position indication may simply be provided as a visual marker (such as a small "dot" or circle) along the bottom of or under the displayed items. Alternatively, such position indication may be similarly provided along the top of or over the displayed items. Note that, in this alternative embodiment, the position indication does not move vertically, but only horizontally.

More particularly, FIG. 11 shows that Item 1 which is at item position P_{IT} = 1 is selected and highlighted, and accordingly a position indication 1102 is presented along the bottom of or under the displayed items at a lengthwise position at an indication position (P_{IN}) = 1. In addition, FIG. 12 shows that Item 2 which is at item position P_{IT} = 2 is selected and highlighted, and accordingly a position indication 1104 is presented along the bottom of the displayed items at a lengthwise position at an indication position P_{IN} = 2. Even further, FIG. 13 shows that Item 3 which is at item position P_{IT} = 3 is selected and highlighted, and accordingly a position indication 1106 is presented along the bottom of or under the displayed items at a lengthwise position at an indication position P_{IN} = 3. Finally, FIG. 14 shows that Item 4 which is at item position P_{IT} = 4 is selected and highlighted, and accordingly a position indication 1108 is presented along the bottom of or under the displayed items at a lengthwise position at an indication position P_{IN} = 4. As apparent from FIGs. 11-14, the item position P_{IT} is a vertical position (from top to bottom) and indication position P_{IN} is a horizontal position (from left to right).

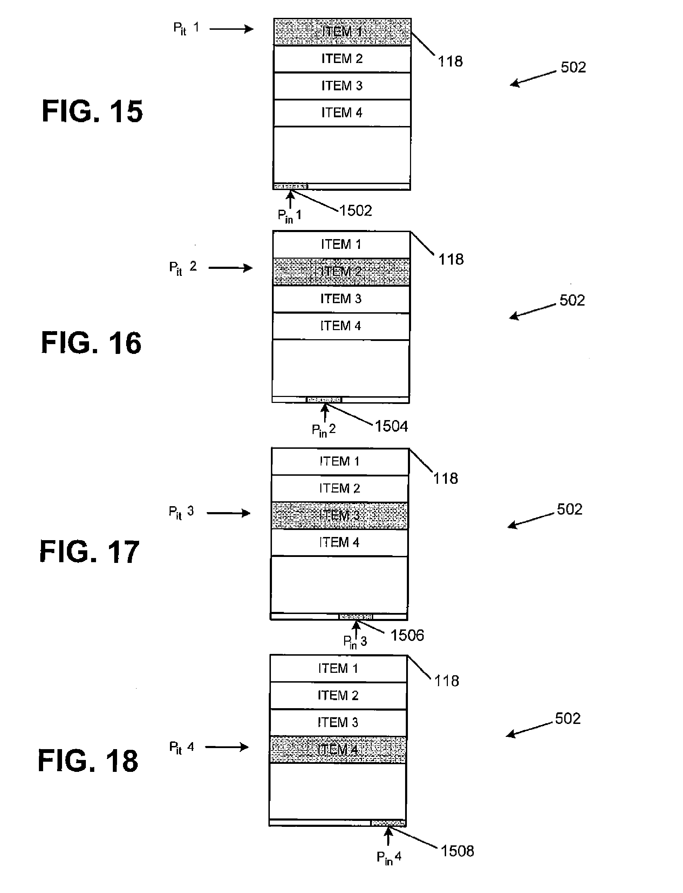

FIGs. 15-18 provide other alternative illustrative representations of selected items of the list presented in the display 118, which include other alternative position indications corresponding to the selected items, to further assist in illustrating alternative techniques of the present disclosure. Again, the list 502 in FIGs. 15-18 includes Item 1, Item 2, Item 3, and Item 4; the count C_{IT} of the total number of items in the list is four (4). As apparent from these figures, a position indication is presented with (but not necessarily along or within) each selected item at a lengthwise position that is proportional to the relative position of the selected item in the list. Also as apparent, the position indication may simply be provided as a visual marker, such as a bar having the indication width W_{IN}, or a scrollbar having the indication width W_{IN} which provides scroll bar functionality, along the bottom of or under the displayed items. Such position indication may be similarly provided along the top of or over the displayed items. Note that, in this alternative embodiment, the position indication does not move vertically, but only horizontally.

More particularly, FIG. 15 shows that Item 1 which is at item position P_{IT} = 1 is selected and highlighted, and accordingly a position indication 1502 is presented along the bottom of or under the displayed items at a lengthwise position at an indication position (P_{IN}) = 1. In addition, FIG. 16 shows that Item 2 which is at item position P_{IT} = 2 is selected and highlighted, and accordingly a position indication 1504 is presented along the bottom of the displayed items at a lengthwise position at an indication position P_{IN} = 2. Even further, FIG. 17 shows that Item 3 which is at item position P_{IT} = 3 is selected and highlighted, and accordingly a position indication 1506 is presented along the bottom of or under the displayed items at a lengthwise position at an indication position P_{IN} = 3. Finally, FIG. 18 shows that Item 4 which is at item position P_{IT} = 4 is selected and highlighted, and accordingly a position indication 1508 is presented along the bottom of or under the displayed items at a lengthwise position at an indication position P_{IN} = 4. As apparent from FIGs. 15-18, the item position P_{IT} is a vertical position (from top to bottom) and indication position P_{IN} is a horizontal position (from left to right).

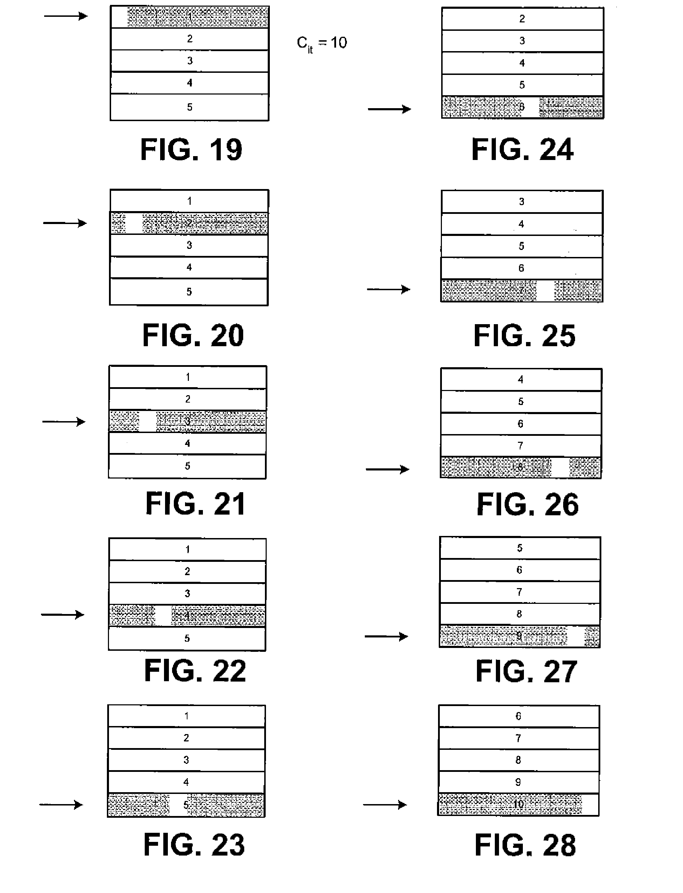

FIGs. 19-28 provide further illustrative representations of selected items of a list presented in the display, where the list includes a larger count of items than that described in relation to FIGs. 5-8. In this example, the items of list include Items 1 through 10, and therefore the count C_{IT} of the total number of items in the list is ten (10). As apparent from these figures, a position indication is presented along or within each selected item at a lengthwise position that is proportional to the relative position of the selected item in the list.

In one example, each position indication is presented only for a limited period of time after a new item selection. In response to the detection of a user input for selecting a new item, the processor 102 initializes or sets a timer to an initial value and runs the timer. For example, the timer may be initialized and set to run after step 428 of FIG. 4B. Upon expiration of the timer, the processor 102 causes the position indication to be removed from the presentation. The timer may be set to any suitable value, for example, a value within the range of 0.5 seconds to 2 seconds. The removal of the position indication may be sudden or gradual (fading over time). Thus, for example, if the position indication is a glow effect as previously described, the glow effect may be visible only for a short period of time (e.g., 1 second) after which it disappears. Thus, the end user is advised as to the relative position of the selected item with even further minimal user interface clutter.

In another example, the technique described herein for presenting a position indication for a selected item of a list may be similarly applied to a selected viewing region of a file, such a single- or multi-page file. In this case, the processor 102 causes at least a portion of the page of the file to be presented for display. The processor 102 detects a user input for selecting a different (vertical) portion of the page to be viewed and, in response, causes the newly selected (vertical) portion of the page to be presented for viewing. Notably, the processor 102 further causes a position indication to be presented for display, along or within the newly selected (vertical) portion of the page, at a (horizontal) position that is proportional to a relative (vertical) position of the newly selected (vertical) portion of the page within the entire file. It may be further advantageous to present such position indication only for a limited period of time after the newly selected (vertical) portion of the page, as described in the previous paragraph.

In yet another example similar to the one described in the previous paragraph, the technique may be applied to a selected cursor position with respect to a file, such a single- or multi-page file. In this case, the processor 102 causes at least a portion of the page of the file to be presented for display. The processor 102 detects a user input for selecting a different (vertical) cursor position and, in response, causes the newly selected (vertical) cursor position to be presented. Notably, the processor 102 further causes a position indication to be presented for display, along or within the new cursor position, at a (horizontal) position that is proportional to a relative (vertical) position of the newly selected cursor position within the file. It may be further advantageous to present such position indication only for a limited period of time after the newly selected cursor position, as described above.

Thus, methods and apparatus for use in presenting a position indication for a selected item of a list having a plurality of items have been described. At least some of the items in the list are presented for display, and a selected item of the list is highlighted. A position indication is also presented, along or within the selected item, at a lengthwise position that is proportional to a relative position of the selected item within the list. Advantageously, the end user is advised as to the relative position of the selected item with minimal user interface clutter. Various embodiments and alternatives are provided for an even further advantageous user interface.

The above-described embodiments of disclosure are intended to be examples only. In some embodiments, the item position P_{IT} may be a horizontal position (from left to right) and indication position P_{IN} may be a vertical position (from top to bottom). Alterations, modifications, and variations may be effected to particular embodiments by those of skill in art without departing from scope of invention, which is defined solely by claims appended hereto.

## Claims

1. A method for use in presenting a position indication for a selected item of a list having a plurality of items, the method comprising:
displaying (304) at least some of the items in the list;
highlighting (306) a selected item of the list; and
displaying (308) a position indication, along or within the selected item, at a lengthwise position that is proportional to a relative position of the selected item within the list.

2. The method of claim 1, wherein the position indication is displayed along the selected item.

3. The method of claim 1, wherein the position indication is displayed along the selected item as a glow effect along the selected item.

4. The method of claim 1, wherein the position indication is displayed along a region which is above or below the items presented for display.

5. The method of claim 1, further comprising:
wherein displaying the position indication is performed for each newly selected item in the list.

6. The method of claim 1, wherein each item in the list may be associated with an item number corresponding to its numeric order in the list, and the method further comprises:
obtaining (426) the lengthwise position of the position indication, the lengthwise position being proportional to a ratio of the item number over the total number of items in the list.

7. The method of claim 1, further comprising:
obtaining (424) a width of the position indication, the width being indirectly proportional to the total number of items in the list; and
wherein displaying the position indication comprises displaying the position indication having the obtained width.

8. The method of claim 1, further comprising:
wherein the items in the list are presented for display from top to bottom; and
wherein the position indication is displayed at a lengthwise position along or within the selected item from left to right.

9. The method of claim 1, wherein the items include at least one of contact identifiers of a list of contacts, message headers of a list of messages, file identifiers of a list of files, and folder identifiers of a list of folders.

10. A computer readable medium, comprising:
a computer readable medium;
computer instructions stored in the computer readable medium; and
the computer instructions being executable by a processor of a computing device for displaying a position indication for a selected item of a list having a plurality of items by performing the method of any one of claims 1-9.

11. A computing device, comprising:
a processor (102);
a communication subsystem (104) coupled to the processor (102);
a user interface coupled to the processor, the user interface comprising a display (118);
memory coupled to the processor (102); and
the processor (102) being configured to perform the method of any one of claims 1-9.
